# EUROPÄISCHE PATENTSCHRIFT

(11) **EP 0 339 211 B1**
(45) Veröffentlichungstag und Bekanntmachung des Hinweises auf die Patenterteilung: **21.09.1994**
(21) Anmeldenummer: 89103707.9
(22) Anmeldetag: 03.03.1989
(51) Int. Cl.: F16K 3/02, F16K 31/06

(54) **Schiebeventil für fluidführende Leitungen**
Gate valve for fluid conduits
Tiroir pour canalisations de fluides

(30) Priorität: 23.04.1988 DE 3813794
(43) Veröffentlichungstag der Anmeldung: 02.11.1989
(73) Patentinhaber: Brennecke, Hermann, D-64297 Darmstadt (DE); Liere, Horst Dipl.-Ing., D-64859 Eppertshausen (DE)
(72) Erfinder: Brennecke, Hermann, D-64297 Darmstadt (DE); Liere, Horst Dipl.-Ing., D-64859 Eppertshausen (DE)
(74) Vertreter: Brommer, Hans Joachim, Dr.-Ing.

(56) Entgegenhaltungen:
- EP-A- 0 253 979
- FR-A- 1 300 764
- GB-A- 678 124
- GB-A- 2 159 249
- US-A- 3 396 904
- US-A- 3 463 443

## Beschreibung

Die vorliegende Erfindung betrifft ein Schiebeventil für fluidführende Leitungen mit einer ortsfesten Ventilplatte und mit zwei separat beweglichen Dichtplatten, die wie die Ventilplatte jeweils mehrere durch Stege gebildete Durchströmöffnungen aufweisen, die durch Verfahren der Dichtplatten wahlweise zu öffnen oder zu schließen sind.

Nach der DE-PS 1 052 195 ist ein Schiebeventil mit zwei separat beweglichen Dichtplatten bekannt. Dieses Schiebeventil, das vor allem als Regelventil benutzt wird, weist eine Ventilplatte mit mehreren einzelnen Öffnungen auf. Die Öffnungen haben dabei alle den gleichen Querschnitt. Anders verhält es sich bei den Dichtplatten. Ihre Öffnungsquerschnitte werden in einer Querrichtung innerhalb der Dichtplatte größer. Dabei sind die Querrichtungen der zunehmenden Öffnungsquerschnitte bei beiden Platten entgegengesetzt ausgerichtet. Durch Verschieben der Dichtplatten kann somit der Durchtrittsquerschnitt stufenlos variiert werden. Durch die Regelbarkeit sind jedoch nur kleine Öffnungsquerschnitte bezogen auf den Gesamtquerschnitt möglich. Des weiteren ist mit dieser Lösung auch ein schnelles Schließen des Schiebers nur schwer realisierbar, weil es hier vorwiegend um die Veränderung des Wirkortes der Strömung geht.

Ein Schiebeventil mit den Merkmalen des Oberbegriffes von Patentanspruch 1 ist durch die US-PS 3 396 904 bekannt. Dabei sind zwar große Öffnungsquerschnitte bezogen auf den Gesamtquerschnitt möglich. Ein schnelles Schließen des Schiebers ist aber auch hier nur schwer realisierbar, weil die eine Dichtplatte einen Stellweg zurückliegen muß, der doppelt so groß ist wie der der anderen Dichtplatte.

Schließlich ist durch die EP-A 253 979 ein Schiebeventil mit geschlitzten Platten bekannt. Dabei wird aber mit zwei ortsfesten Führungsplatten gearbeitet, zwischen denen die Ventilplatte verschiebbar geführt ist.

Im vorliegenden Fall geht es darum, ein Schiebeventil für Rohrleitungen explosionsgefährdeter Anlagen zu entwickeln. Das Schiebeventil soll schließen, sobald im Rohrleitungssystem der Druck schlagartig ansteigt oder optische Sensoren einen Feuerschein erkennen, das heißt das Schiebeventil soll die Fortpflanzung einer Druck- und Flammenwelle innerhalb des Rohrsystems verhindern.

Die der Erfindung zugrunde liegende Aufgabe besteht daher darin, ein Schiebeventil zu entwickeln, das sich durch schnelles und sicheres Schließen auszeichnet. Dabei sollen die Dicht- und Ventilplatten bei geschlossenem Schiebeventil bis zu einem Druck von ca. 1 MPa flammendicht sein. Außerdem wird ein großer Öffnungsquerschnitt - was gleichbedeutend mit schmalen Stegen ist - angestrebt, um die äußeren Bauabmessungen des gesamten Schiebeventils klein zu halten.

Die Aufgabe ist erfindungsgemäß durch die Merkmale des Patentanspruches 1 gelöst.

Die Erfindung beruht also auf der Idee, daß die Öffnungsquerschnitte der Ventilplatte durch zwei entgegengesetzt parallel bewegte Dichtplatten verschlossen werden. Durch die Aufteilung der Bewegung muß jede Dichtplatte zum Schließen des Schiebers nur den halben Weg gegenüber den Schiebern aus dem Stand der Technik zurücklegen. Folglich ist die Schließzeit dieses neuen Kurzhubschiebers erheblich kürzer. Dies ist bei explosionsgefährdeten Anlagen von entscheidender Bedeutung.

Außerdem benötigen die Stege der Ventil- und Dichtplatten nur noch etwa die halbe Höhe der Durchströmöffnungen unter Berücksichtigung einer geringen Überlappung. Man kommt daher mit einer geringen Masse für die Dichtplatten aus, wodurch sich ihre Schließzeit nochmals verringert.

Schließlich erhält man einen großen Durchschnittsquerschnitt bezogen auf den Gesamtquerschnitt.

Da die ortsfeste Ventilplatte aus zwei gleichartigen um 180° gedrehten Hälftenbesteht, deren Stege in Strömungsrichtung miteinander fluchten, kommt das Ventil mit geringerem Fertigungsaufwand aus.

Durch den L-förmigen Querschnitt der Stege der Ventilplatte und dadurch, daß die Ventilplatte aus zwei Hälftenbesteht, innerhalb derer die Ventilplatten bewegt werden, bewegen sich die beiden Dichtplatten in den Hohlräumen zwischen den beiden Ventilplatten und bilden in der Offenstellung durchgehend platte Strömungswege. Um ein Beulen der Stege der Dichtplatten zu verhindern, überlappen sich die einzelnen Dichtplatten im geschlossenen Zustand, wobei sich die Dichtleisten der stromabwärts liegenden Dichtplatte unmittelbar an den Stegen der Ventilplatte abstützen. Die Stege der stromaufwärts liegenden Dichtplatte stützen sich wiederum an den Stegen der Druckplatte und der stromabwärts liegenden Dichtplatte ab. Somit bilden die Ventilplatte und die Dichtplatten einen stabilen Verbund.

Des weiteren empfiehlt es sich, die Stege der Ventilplatte mit strömungsgünstigen Versteifungen zu versehen. Sie haben ein im wesentlichen dreiecksförmigen Querschnitt und sind auf beiden Seiten der Ventilplatte an deren Stege befestigt. Die Versteifungen verhindern einerseits im geschlossenen Zustand des Kurzhubschiebers ein Beulen der Bauteilkombination Ventilplatte/Dichtplatten, und andererseits mindern sie die durch das Ventil bedingte Drosselwirkung innerhalb des Leitungssystems. Das strömende Fluid prallt nicht mehr frontal auf die Stege, sondern wird strömungsgünstig geführt.

In der offenen Stellung des Schiebers sorgen die Dichtleisten zusammen mit den Stegen und den Strömungsleitblechen für eine geschlossene Querschnittskontur der die Strömung behindernden Stege. Durch diese geschlossene äußere Form wird die Gefahr der Kavitation an Übergangsstellen stark vermindert.

Die Wegbegrenzung der Dichtplatten befindet sich im Bereich der Antriebseinheiten.

Beim Schließen des Kurzhubschiebers werden die stark beschleunigten Dichtplatten auf einen Weg von ca. 1 mm abgebremst. Der elastische Stoß zwischen den Anschlagteilen führt zu einem Rückfedern der Dichtplatten. Um ein Öffnen zu verhindern, verfügen die Antriebseinheiten über eine separate Verrastung in der Geschlossenstellung. Die Gesperre werden erst wieder durch einen Öffnungsmechanismus des Kurzhubschiebers entriegelt.

Dieser Mechanismus ist so konstruiert, daß er nur beim Öffnungsvorgang bewegt wird. Nach Beendigung des Öffnungsvorganges verfährt er in seine Ruheposition, die den Schließvorgang nicht behindert.

Es liegt im Rahmen der Erfindung, die beiden Dichtplatten nicht innerhalb, sondern außerhalb der Ventilplatte anzuordnen, entweder beidseits je eine Dichtplatte oder an der Ventilplattenseite beide Dichtplatten. Dabei müssen jedoch die Zwischenstege an der Ventilplatte oder den Dichtplatten vorgesehen werden, die die Funktion der vorbeschriebenen Dichtleisten übernehmen.

Als weitere Variante zu dem Schiebeventil mit entgegengesetzt parallel wirkenden Dichtplatten bietet sich ein Drehschieber an. Dieser Drehschieber hat in Analogie zu dem zuvor beschriebenen Kurzhubschieber eine starre ortsfeste Ventilplatte und zwei schwenkbare Dichtplatten. Hier nutzt man die entgegengesetzte Drehbewgung der einzelnen Dichtplatten zur Aufteilung des Schließhubs. Die Unterschiede zwischen den beiden Varianten bestehen im wesentlichen in den Querschnittsformen der Öffnungsquerschnitte und in der Anordnung der Antriebseinheiten. Die kreisförmigen Dichtplatten des Drehschiebers können dreiecks-, kreisausschnitts- und kreisringförmige Querschnitte haben. Die Antriebseinheiten können bei dieser Schieberart tangential - also in raumsparender Weise - angeordnet werden. Parallelen- und Drehschieber haben gegenüber dem Stand der Technik die gleichen Vorteile.

Weitere Einzelheiten der Erfindung ergeben sich aus der nachfolgenden Beschreibung der zeichnerisch dargestellten Ausführungsform.
- Fig. 1:: Teilschnitt der Seitenansicht eines Kurzhubschiebers, wobei die obere Hälfte des Schiebers in offener, die untere Hälfte in geschlossener Stellung dargestellt ist
- Fig. 2:: Teilschnitt der Vorderansicht eines Kurzhubschiebers
- Fig. 3:: Schnitt einer Antriebseinheit für eine Dichtplatte mit Auslöse- und Sperrmechanismus.

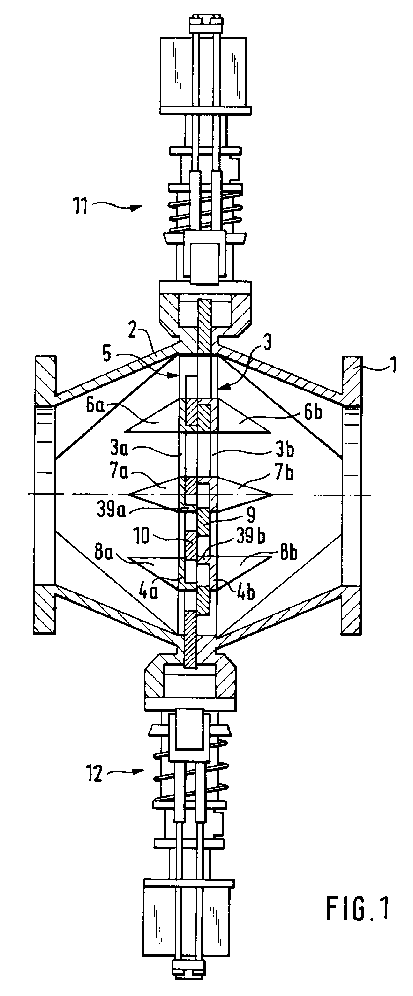

Fig. 1 zeigt ein Schiebeventil für eine fluidführende Rohrleitung im Schnitt. Die Gehäusehälften 1, 2 tragen im Bereich ihrer gemeinsamen Trennfuge je eine Hälfte 3a beziehungsweise 3b einer Ventilplatte 3. Jede Ventilplatte trägt eine Reihe L-förmiger Stege 4a beziehungweise 4b, die zwischen sich Durchströmöffnungen 5 freilassen. Außerdem sind die Stege durch aufgeschweißte Strömungsleitbleche 6a, 6b; 7a, 7b; 8a, 8b versteift. Die Strömungsleitbleche sind dabei zur besseren Führung des Fluids teilweise asymmetrisch ausgebildet und laufen jeweils konvergierend von der Ventilplatte weg.

In den Freiräumen der Ventilplatte können sich zwei einzelne geschlitzte Dichtplatten 9, 10 relativ zueinander und relativ gegenüber der Ventilplatte 3 quer zur Strömungsrichtung des Fluids bewegen. In der offenen Stellung des Schiebers sind die Stege der Dichtplatten 9 und 10 in den winkelförmigen Stegen 4a und 4b der Ventilplatte versenkt. Dabei bilden die Strömungsleitbleche 6a, 6b; 7a, 7b; 8a, 8b die Dichtplattenstege und die Ventilplattenstege mehrere durchgehend glatte Strömungskanäle, wodurch der Strömungswiderstand innerhalb des Ventilbereichs minimiert wird.

Um den Kurzhubschieber zu schließen, werden die parallel nebeneinander geführten Dichtplatten 9, 10 in entgegengesetzter Richtung aufeinander zu bewegt. In ihrer Geschlossenstellung überdecken sich ihre Kanten sowohl gegeneinander als auch gegenüber den Kanten der ortsfesten Ventilplatte 3.

Durch diese Überlappung erreicht man einerseits eine gute Dichtwirkung, andererseits eine stabile Abstützung der Dichtplattenstege gegenüber der Ventilplatte. Die Gefahr des Aufbiegens der Stege infolge einer hohen Druckwelle ist somit beseitigt.

Zur Bewegung der Dichtplatte des Kurzhubschiebers sind diametral am Gehäuse quer zur Strömungsrichtung des Fluids baugleiche Antriebseinheiten 11, 12 angebracht. Die Antriebseinheiten sind an Flanschen, die an den Gehäusehälften 1, 2 befestigt sind, montiert.

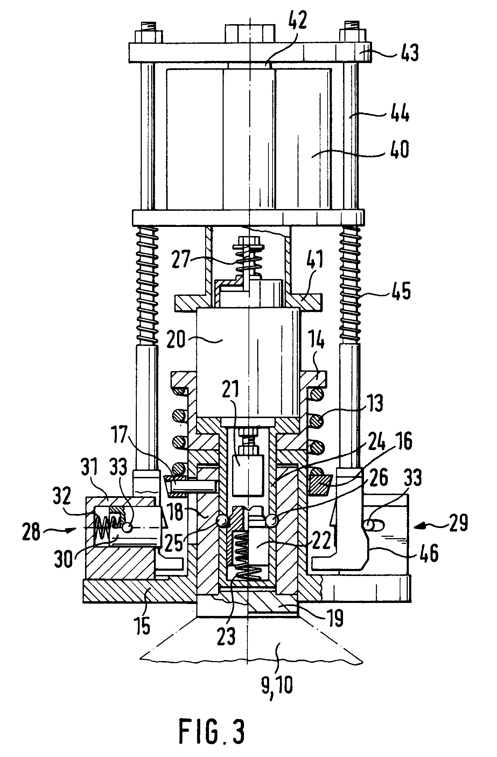

Figur 3 zeigt eine solche Antriebseinheit mit Teilschnitten. Zum Verfahren der Dichtplatte 9 oder 10 wird eine vorgespannte Druckfeder 13 verwendet. Ihr oberes Ende stützt sich über ein Hubmagnetgehäuse 14 und einen Flanschadapter 15 an den Gehäuseteilen 1, 2 ab.

Der untere Teil der Druckfeder liegt auf einer Rastscheibe 16 auf. Die Rastscheibe steht über mehrere Zylinderstifte 17 unmittelbar mit einem Schubrohr 18 in Wirkverbindung, das über eine Scheibe 19 starr mit der Dichtplatte 9 oder 10 verbunden ist.

Zur Freigabe der Federkraft der Druckfeder 13 für den Schließvorgang dient ein Entriegelungsmechanismus. Dazu sitzt im Hubmagnetgehäuse 14 ein Hubmagnet 20 in Verbindung mit einer Kugelbüchse 24. Die Kugelbüchse 24 trägt in ihrer halben Höhe mehrere radiale Bohrungen, in denen Rastkugeln 25 untergebracht sind. Die Rastkugeln werden dabei durch einen mit einer Druckfeder 23 nach oben gedrückten Riegelbolzen 22 in ihrer Position gehalten. Die Rastkugeln 25 werden dadurch in eine Ringnut 26 des Schutzrohres gedrückt und halten daher die Dichtplatte entgegen der auf sie einwirkenden Schließkraft fest.

Bei Betätigung des Hubmagnets 20 schlägt ein Hammer 21 gegen die Kraft einer Rückholfeder 27 auf den Riegelbolzen 22. Der sich gegen die Federkraft der Druckfeder 23 abwärts bewegende Riegelbolzen gibt die Rastkugeln 25 in radialer Richtung frei, wodurch die Verriegelung zwischen dem Schutzrohr 18 und der Kugelbüchse 24 aufgehoben wird. Der Kurzhubschieber schließt sich.

Um ein Zurückprallen der Dichtplatten 9, 10 nach dem Schließvorgang zu verhindern, sind auf jedem Flanschadapter 15 zwei baugleiche Gesperre 28, 29 angebracht, die in Figur 3 links geschnitten und rechts ungeschnitten dargestellt sind. Dazu sind auf dem Flanschadapter zwei Bolzengehäuse 31 befestigt. In jedem Bolzengehäuse sitzen über Zylinderstifte 33 verdrehgesicherte Rastbolzen 30. Sie werden durch die Federkraft der Druckfedern 32 in ihrer Schließposition gehalten. Bei der Abwärtsbewegung der Rastscheibe 16 werden die Rastbolzen kurzzeitig zurückgedrückt, um nach dem Passieren der Rastscheibe diese an einer Aufwärtsbewegung zu hindern.

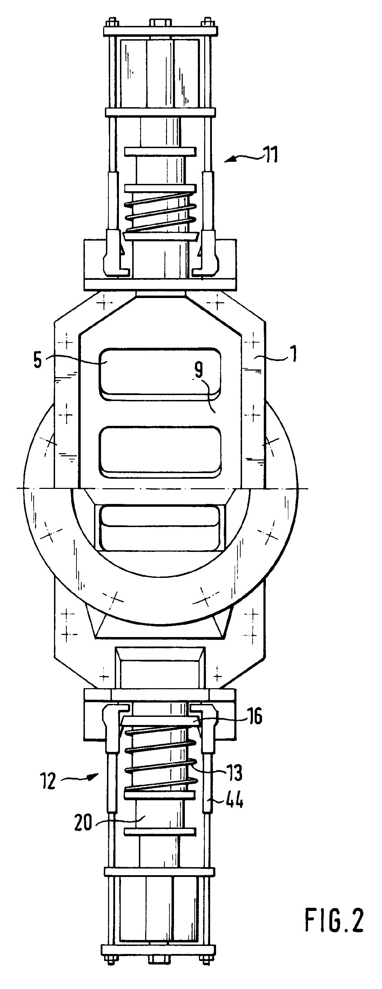

Dieser Zustand ist in Figur 2 dargestellt. Wie man sieht, ist die Antriebseinheit 12 mit arretierter Rastscheibe 16 abgebildet.

Geöffnet wird das Schieberventil mit Hilfe eines Pneumatikzylinders 40. Er ist auf dem Doppelflansch 41 montiert, der sich auf dem Hubmagnet 20 abstützt. Die in Figur 3 nach oben gerichtete Kolbenstange 42 des Pneumatikzylinders 40 trägt ein Querhaupt 43, in das mit Haken versehene Zugstangen 44 eingehängt sind.

Soll nun das Schiebeventil geöffnet werden, so wird der Pneumatikzylinder mit Druckluft beaufschlagt, wodurch die Zugstangen 44 mit ihren Haken hochfahren. Dabei legen sich die Haken der Zugstange an der Unterseite der Rastscheibe 16 an. Gleichzeitig entriegeln die Nocken 46, die an der Rückseite der Haken angebracht sind, über Zylinderstifte 33 die Gesperre 28 und 29, so daß die Dichtplatte 9, 10 in die Öffnungsstellung verschoben wird. Die Aufwärtsbewegung der Zugstangen ist beendet, wenn die Ringnut 26 des Schutzrohres 18 die Höhe der Rastkugeln 25 erreicht. Die Rastkugeln 25 verriegeln dann wieder das Schubrohr 18 mit der Kugelbüchse 24.

Schließlich bringen die auf den Zugstangen sitzenden Druckfedern 45 die Zugstangen 44, das Querhaupt 43 und die Kolbenstange 42 in ihre Ausgangslage gemäß Figur 3 zurück. Dadurch ist sichergestellt, daß die Masse des Abhebemechanismus 40-45 und die Gesperre 28 und 29 beim Schließvorgang nicht mitbewegt zu werden braucht.

## Patentansprüche

1. Schiebeventil (1) für fluidführende Leitungen mit einer ortsfesten Ventilplatte (3a, 3b) und mit zwei separat beweglichen Dichtplatten (9, 10), die wie die Ventilplatte jeweils mehrere durch Stege (4a, 4b) gebildete Durchströmöffnungen (5) aufweisen, die durch Verfahren der Dichtplatten (9, 10) wahlweise zu öffnen oder zu verschließen sind, wobei die Öffnungsquerschnitte (5) der ortsfesten Ventilplatte (3a, 3b) etwa die doppelte Querschnittsfläche deren Stege (4a, 4b) aufweisen, und die Stege der einzelnen Dichtplatten (9, 10) jeweils etwa den halben Querschnitt der Durchströmöffnungen (5) verschließen, und wobei sich die überdeckenden Kanten der Stege (4a, 4b) sowohl gegeneinander als auch gegenüber der ortsfesten Ventilplatte (3a, 3b) abstützen, wozu letztere quer zur Schiebebewegung und parallel zur Fließrichtung des Fluids versteift sind,
dadurch gekennzeichnet,
- daß die ortsfeste Ventilplatte (3a, 3b) aus zwei gleichartigen, um 180° gedrehte Hälften besteht, deren Stege (4a, 4b) in Strömungsrichtung miteinander fluchten,
- daß die beiden Dichtplatten (9, 10) innerhalb der Ventilplattenhälften (3a, 3b) geführt sind,
- und daß die Stege (4a, 4b) jeder Hälfte (3a, 3b) der ortsfesten Ventilplatte etwa L-förmige Querschnitte aufweisen, deren in Strömungsrichtung parallele Schenkel einander zugewandt sind und als mit den Dichtplatten (9, 10) zusammenwirkende Dichtleisten (39a, 39b) fungieren.

2. Schiebeventil nach Anspruch 1,
dadurch gekennzeichnet,
daß die Dichtleisten (39a, 39b) zugleich zur Abstützung der Dichtplatten (9, 10) in Strömungsrichtung des Fluids in der Geschlossenstellung dienen.

3. Schiebeventil nach Anspruch 1,
dadurch gekennzeichnet,
daß die ortsfeste Ventilplatte durch Strömungsleitbleche (6a, b; 7a, b; 8a, b) versteift ist.

4. Schiebeventil nach Anspruch 1,
dadurch gekennzeichnet,
daß die Dichtplatten (9, 10) in ihrer geschlossenen Stellung über Gesperre (28, 29) gehalten werden.

5. Steuerventil nach Anspruch 1, wobei die Dichtplatten mit einem Öffnungsmechanismus verbunden sind,
dadurch gekennzeichnet,
daß die Dichtplatten (9, 10) bei der Schließbewegung vom Öffnungsmechanismus (40 - 45) abgekoppelt sind.

## Claims

1. Slide valve (1) for fluid-conveying ducts with a stationary valve plate (3a, 3b) and two separately moveable sealing plates (9, 10) which, the same way as the valve plate, have a respective plurality of through-flow openings (5) formed by webs (4a, 4b) which are to be selectively opened or closed by moving the sealing plates (9, 10), wherein the cross-section of the openings (5) of the stationary valve plate (3a, 3b) are approximately double the cross-sectional surface area of their webs (4a, 4b) and the webs of the individual sealing plates (9, 10) respectively close approximately one-half the cross-section of the through-flow openings (5) and wherein the overlapping edges of the webs (4a, 4b) are supported against each other as well as against a stationary valve plate (3a, 3b), the latter being stiffened transversely to the sliding movement and parallel to the direction of flow of the fluid,
characterised in that
- the stationary valve plate (3a, 3b) consists of two similar halves rotated about 180° the webs (4a, 4b) of which are aligned with each other in the direction of flow,
- the two sealing plates (9, 10) are guided within the valve plate halves (3a, 3b),
- and the webs (4a, 4b) of each half (3a, 3b) of the stationary valve plate have an approximately L-shaped cross-section, the limbs of the web lying parallel in the direction of flow are turned towards each other and function as sealing bars (39a, 39b) co-acting with the sealing plates (9, 10).

2. Slide valve according to claim 1,
characterised in that
in the closed position the sealing bars (39a, 39b) serve also for supporting the sealing plates (9, 10) in the direction of flow, in the closed position.

3. Slide valve according to claim 1,
characterised in that
the stationary valve plate is stiffened by means of flow guide sheet metal members (6a, b; 7a, b; 8a, b).

4. A slide valve according to claim 1,
characterised in that
the sealing plate (9, 10) are held in their closed position by way of locks (28, 29).

5. A control valve according to claim 1, wherein the sealing plates are connected with an opening mechanism,
characterised in that
for the closure movement the sealing plates (9, 10) are uncoupled by the opening mechanism (40 - 45).

## Revendications

1. Distributeur à tiroir (1) pour canalisations véhiculant des fluides, comportant une plaque fixe de distribution (3a,3b) et deux plaques d'étanchéité (9,10) mobiles séparément et qui possèdent, comme la première plaque, respectivement plusieurs ouvertures de passage (5) limitées par des barrettes (4a,4b), et qui peuvent être ouvertes ou fermées au choix au moyen d'un déplacement des plaques d'étanchéité (9,10) et dans lequel les sections transversales d'ouverture (5) des plaques fixes de distribution (3a,3b) possèdent approximativement une surface en coupe transversale égale au double de celle de leurs barrettes (4a,4b), et les barrettes des plaques individuelles d'étanchéité (9,10) ferment respectivement approximativement la moitié de la section transversale des ouvertures de passage (5), et dans lequel les bords en recouvrement des barrettes (4a,4b) prennent appui aussi bien l'un contre l'autre que sur la plaque fixe de distribution (3a,3b), ces bords étant renforcés transversalement par rapport au mouvement de coulissement et parallèlement à la direction de circulation du fluide,
caractérisé en ce
- que la plaque fixe de distribution (3a,3b) est constitué de deux moitiés similaires pivotées de 180° et dont les barrettes (4a,4b) sont alignées entre elles dans la direction de l'écoulement,
- que les deux plaques d'étanchéité (9,10) sont guidées à l'intérieur des moitiés (3a,3b) de la plaque de distributeur, et
- que les barrettes (4a,4b) de chaque moitié (3a,3b) de la plaque fixe de distribution possèdent des sections transversales approximativement en forme de L, dont les branches, qui sont parallèles à la direction d'écoulement, sont tournées l'une vers l'autre et agissent à la manière de baguettes d'étanchéité (39a,39b), qui coopèrent avec les plaques d'étanchéité (9,10).

2. Distributeur à tiroir selon la revendication 1, caractérisé en ce que les baguettes d'étanchéité (39a, 39b) sont utilisées simultanément pour soutenir les plaques d'étanchéité (9,10) dans la direction d'écoulement du fluide, dans la position fermée.

3. Distributeur à tiroir selon la revendication 1, caractérisé en ce que la plaque fixe de distributeur est renforcée par des chicanes de guidage d'écoulement (6a,6b; 7a,b; 8a,b).

4. Distributeur à tiroir selon la revendication 1, caractérisé en ce que les plaques d'étanchéité (9,10) sont maintenues dans leur position fermée par l'intermédiaire de systèmes de blocage (28,29).

5. Soupape de commande selon la revendication 1, dans laquelle les plaques d'étanchéité sont reliées à un mécanisme d'ouverture, caractérisée en ce
que les plaques d'étanchéité (9,10) sont découplées du mécanisme d'ouverture (40-45), lors du déplacement de fermeture.
